# EUROPEAN PATENT SPECIFICATION

(11) **EP 1 135 311 B1**
(45) Date of publication and mention of the grant of the patent: **26.10.2005**
(21) Application number: 99957792.7
(22) Date of filing: 01.12.1999
(51) Int. Cl.: B65D 90/08, B65D 90/04, B65G 11/16, B65G 15/62, B65G 19/28

(54) **METHOD OF MAGNETICALLY RETAINING A REPLACEABLE WEAR PLATE, AND APPARATUS USING SAID METHOD**
VERFAHREN ZUM MAGNETISCHEN HALTEN EINER AUWECHSELBAREN VERSCHLEISSPLATTE UND VORRICHTUNG ZUR VERWENDUNG DES VERFAHRENS
PROCEDE DE RETENUE MAGNETIQUE POUR PLAQUE D'USURE REMPLACABLE ET DISPOSITIF D'UTILISATION DE CE PROCEDE

(30) Priority: 02.12.1998 US 204326
(43) Date of publication of application: 26.09.2001
(73) Proprietor: Rampage Ventures Inc., N/A George Town, Grand Cayman (KY)
(72) Inventor: MILES, David, Roger, Kelowna, British Columbia V1W 1R4 (CA)
(74) Representative: Long, Giorgio
(86) International application number: PCT/CA1999/001154
(87) International publication number: WO 2000/032500

(56) References cited:
- EP-A- 0 179 307
- US-A- 4 997 025

## Description

### Technical Field

This invention pertains to a method of magnetically retaining a replaceable wear plate on a retainer for absorbing wear in discharge chutes, conveyors and other locations exposed to moving abrasives such as cement, sand, gravel, etc, and to an apparatus used as a "patch" to cover a worn region of a ferrous object.

### Background

Wear absorbing plates are commonly used to line chutes, hoppers, trunnions, chain runs, loading decks and other locations which are exposed to excessive wearing. For example, hardened wear plates are used to line surfaces over which cement, sand, gravel, or other abrasives flow. The objective is to reduce the rate of wear caused by such abrasives. Ordinarily, wear plates are formed of high grade steels having better abrasion resistant characteristics than the materials forming adjacent portions of the chute, hopper, trunnion, etc. The wear plate thus extends the useful life of the chute, hopper, etc.

Wear plates are normally affixed at wear points by welding, bolting, riveting, clamping or other relatively permanent means. Such forms of attachment can make it difficult, inconvenient, time consuming, labour intensive and/or expensive to remove and replace a wear plate which has worn out. Particular difficulties can arise if grinders or cutting torches are required to remove a worn out wear plate, for example if there is a hazard of fire or explosion in the adjacent surroundings, as is common in installations such as grain elevators, oil or gas refineries, saw mills, etc. Moreover, wear plates are often located in cramped working spaces which increase the difficulty of removing and replacing a worn out wear plate.

The present invention overcomes the foregoing difficulties by providing a method of magnetically retaining, removing and replacing a wear plate at a wear point. The magnetized wear plate retainer also has impact absorbing characteristics which can improve the wear plate's capability to resist wear.

United States Patent No. 4,340,616 discloses a method for decreasing surface wear by incorporating magnetic material into the surface to provide a sacrificial wear-resistant surface. For example, the wear resistant capability of a pipe which conveys an abrasive slurry can be improved. But this does not address the aforementioned difficulties encountered in removing and replacing a worn out wear plate.

WO-A-99/56879, prior art in sense of Article 54(3) EPC, discloses a grinding mill liner having inward and outwards layers (made of two different elastomeric materials) and a plurality of magnets embedded within the entire inward layer. Said magnets are arranged in parallel rows, which extend transversely along inside the all inward layer. But said liner is rigid and must be preformed in a suitable shape before using; that is, it cannot be readily and flexibly adapted to different shaped surfaces.

### Summary of Invention

The invention provides, in one embodiment, a method of magnetically retaining a replaceable, ferrous wear plate in position on a wear plate retainer during passage of abrasive material over said wear plate, comprising forming a lower retainer layer and an upper retainer layer atop said lower layer. The upper layer is formed of a relatively hard, impact and abrasion resistant material such as 80A durometer polyurethane material. The lower layer formed of a relatively soft, shock-absorbent material such as 55A durometer polyurethane material. A plurality of magnets are embedded within the upper layer to removably and magnetically retain a wear plate atop the upper layer.

Pole pieces are embedded within the upper layer on opposite sides of each magnet and extending above the magnets. The pole pieces protect the magnets from impact forces and focus the magnetic field forces emanating from the magnets.

The magnets are preferably arranged in rows, with adjacent poles of adjacent pairs of magnets within adjacent rows having alternate polarity. The rows are respectively parallel to one another and extend transversely to a direction of material flow across the wear plate.

Advantageously, a plurality of shock-absorbing recesses can be formed in the lower layer.

In another embodiment the method of the invention comprises forming a less expensive, easily fabricated single layer of polyurethane material. The single layer may be either a relatively hard, impact and abrasion resistant material or a relatively soft, shock-absorbent material, depending upon which material's characteristics are preferred in the application of interest.

In a further embodiment, the method of the invention is a method of cushioning fragile moving materials in which one may dispense with the wear plate and form only a dual layer apparatus having magnets embedded in the lower layer. The apparatus is allowed to magnetically attach itself to a ferrous surface such as a suitable portion of a discharge chute, hopper, trunnion, etc. leaving the softer layer uppermost to cushion the impact of a fragile moving material.

Still further embodiments of the invention provide a single layer apparatus having magnets embedded therein. Such apparatus can be used as a "patch" to cover a worn region of a ferrous object such as a cylindrical pipe wall.

### Brief Description of Drawings

Figure 1 is a cross-sectional side elevation view of a retainer having a replaceable, magnetically retained wear plate in accordance with a method of the present invention.
Figure 2 is a perspective illustration of a portion of the preferred retainer, with wear plate removed in accordance with a method of the present invention.
Figure 3 is a cross-sectional side elevation view according to an alternate embodiment of the invention which does not require a wear plate.
Figures 4A and 4B are respectively cross-sectional side elevation and perspective illustrations of a single layer embodiment of the invention which does not require a wear plate.
Figure 5 is schematic cross-sectional illustration of a worn pipe, showing the embodiment of Figures 4A and 4B magnetically affixed to the pipe's exterior wall as an abrasion-resistant patch to cover and seal the pipe at the point of wear.
Figure 6 is similar to Figure 4B and further illustrates an abrasion-resistant pad for improving the sealing capability of the invention.

### Description

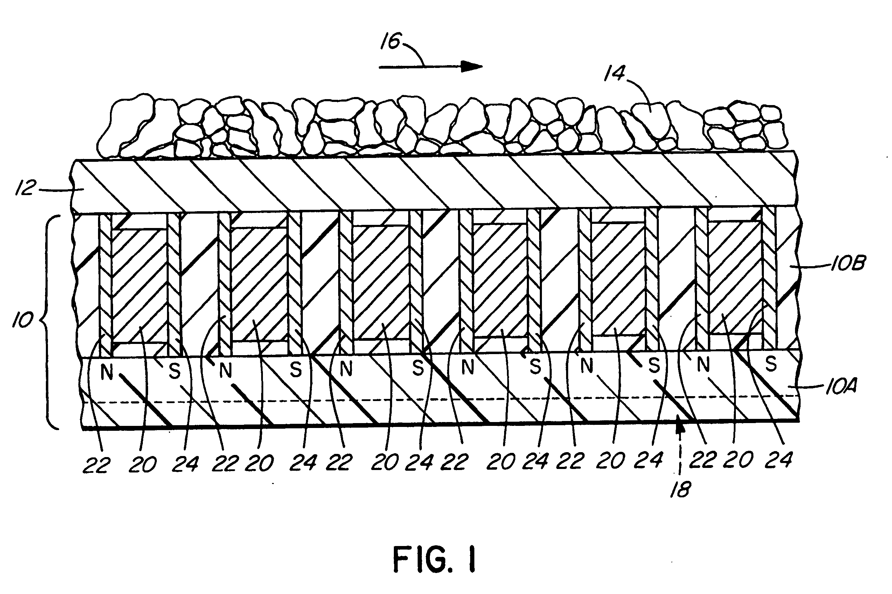

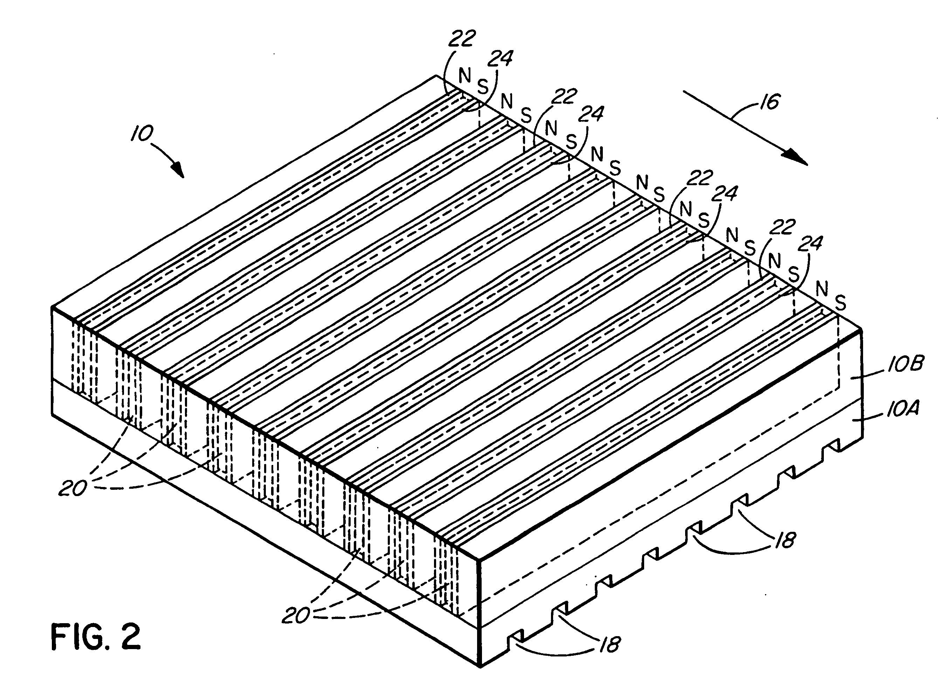

Figures 1 and 2 depict a retainer 10 for removably, magnetically retaining a ferrous wear plate 12 formed in accordance to a method of the present invention. Abrasive material 14 flows over wear plate 12 in the direction indicated by arrow 16, gradually wearing wear plate 12 to the point at which it must be replaced. Retainer 10 can be fixed in a discharge chute, hopper, trunnion or other location exposed to abrasive material 14 by bolting, screwing, welding, adhesive or other suitable attachment means. Since wear plate 12 is removably magnetically attached to retainer 10 as hereinafter explained, wear plate 12 can easily be removed and replaced when it wears out without any need for removal or replacement of retainer 10.

According to a method of the invention the retainer 10 is made up of two separate layers 10A, 10B consisting of different types of material. Each material may be an elastomer such as polyurethane. Lower layer 10A is preferably formed of relatively soft 55A durometer polyurethane material which provides a shock absorbing capability. Upper layer 10B is preferably formed of a harder, impact and abrasion resistant 80A durometer polyurethane material. Suitable 55A and 80A durometer polyurethane material is manufactured by the chemical division of Uniroyal Inc., Naugatuck, Connecticut, under product designations Uniroyal™ Vibrathane™ 8050 and Uniroyal™ Vibrathane™ 8083 respectively. Optionally, a plurality of parallel, grooved recesses 18 (Figure 2) can be formed in the bottom face of retainer 10. Recesses 18 improve the shock-absorbing capability of lower layer 10A by allowing the portions of layer 10A surrounding the respective recesses 18 to flex into the recesses.

A plurality of magnetic strips 20 (hereafter "magnets"), each having a north pole "N" and a south pole "S" are embedded within upper layer 10B. Each magnet 20 is sandwiched between a pair of impact-resistant pole pieces 22, 24. Pole pieces 22, 24 are preferably steel plates having a height dimension greater than the height dimension of magnets 20. This allows pole pieces 22, 24 to be embedded within upper layer 10B with the upper ends of pole pieces 22, 24 substantially flush with the top face of retainer 10 and with magnets 20 protectively recessed between their respective pole pieces. Pole pieces 22, 24 accordingly protect magnets 20 from impact forces to which retainer 10 can commonly be subjected during normal operation of the chute, hopper, etc. in which retainer 10 is mounted. Pole pieces 22, 24 also serve to focus the magnetic field forces emanating from magnets 20.

Within each pair of longitudinally adjacent rows of magnets, adjacent magnets in each row are oriented to alternate the polarities of that magnet pair. Thus, the south ("S") pole of each magnet 20 in one row is oriented to face the north ("N") pole of the immediately adjacent magnet in the next row, and vice versa. This orientation of magnets 20 assists in providing full magnetic field coverage over the top face of retainer 10 while minimizing "dead spots" (i.e. regions of reduced magnetic field coverage having reduced capability to magnetically attach wear plate 12). Magnets 20 may be formed of a suitable magnetic material, such as grade 5 ceramic.

As best seen in Figure 2, magnets 20 embedded within upper layer 10B extend transversely to the direction 16 of material flow across wear plate 12. This enhances the ability of retainer 10 to magnetically resist possible sliding of wear plate 12 relative to retainer 10 due to forces imparted to wear plate 12 by heavy abrasives moving across wear plate 12 at high speed.

Retainer 10 can be made by a molding process. For example, a mold (not shown) having the desired shape may be constructed. The mold is inverted, then magnets 20 and pole pieces 22, 24 are positioned within the mold, in the same locations as described above in reference to the completed retainer 10. Impact and abrasion resistant material in liquified form is then poured into the mold over magnets 20 to form upper layer 10B. Softer, shock-absorbent material in liquified form is then poured into the mold to form lower layer 10A. A chemical bonding action occurs at the interface between the two types of material, securely bonding the two layers together. A mold cover formed with a series of ribs is then secured atop the mold, to embed the cover's ribs in the softer material and thereby form grooved recesses 18 in the bottom face of retainer 10. After the liquified material hardens, the mold is opened and the completed retainer removed therefrom.

In operation, retainer 10 is fixed in place at the wear point as aforesaid, and wear plate 12 is laid atop retainer 10 to magnetically attach wear plate 12 to retainer 10. Abrasive material 14 is then allowed to flow across wear plate 12 in the direction of arrow 16. The shock absorbent characteristics of retainer 10 assist in absorbing some of the forces generated by repeated impact of material 14 with retainer 10, somewhat reducing wear on wear plate 12 and prolonging its life. Magnets 20 embedded within retainer 10 are protected from being damaged by such impact forces by the aforementioned recessing of magnets 20 within the hard material forming upper layer 10B and by sandwiching each magnet between a protective pair of steel plate pole pieces 22, 24.

If wear plate 12 becomes worn out, it can be replaced quickly, easily and safely by inserting the tip of a pry bar (not shown) between the magnetically attached faces of retainer 10 and wear plate 12 and applying a downward force to the pry bar so as to break the force of magnetic attraction exerted by magnets 20 and lift wear plate 12 clear of upper layer 10B. The worn out wear plate 12 is then removed and a new wear plate laid atop retainer 10 to magnetically attach the new wear plate to the retainer. The pry bar can be inserted from any side of retainer 10, thus enabling a workman to perform the removal operation from the most conveniently accessible location.

The invention significantly reduces the time required to replace a worn out wear plate, thus reducing equipment down time, and reducing costs. The need for skilled labour and specialized removal equipment is also reduced, as is the potential for damage or injury due to spark or flame hazards during the removal operation. Further, less expensive wear plate materials can be used, because worn out wear plates can be replaced quickly and easily with the aid of the invention. By contrast, prior art wear plates are commonly made of relatively expensive longer lasting materials, due in part to the comparatively high cost of removing and replacing such wear plates.

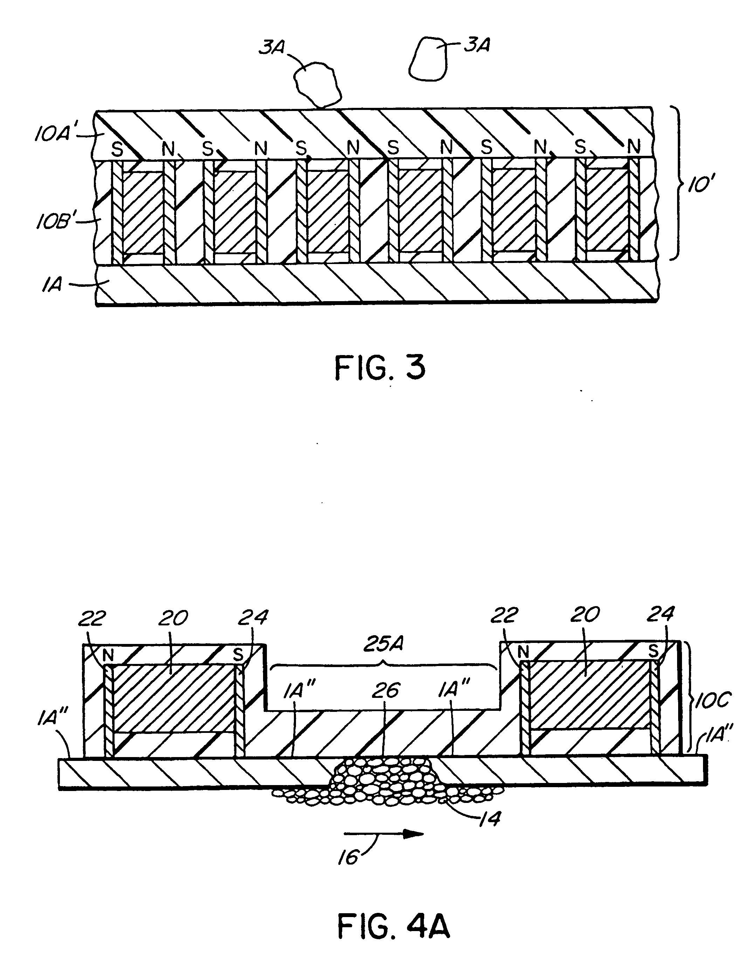

In some circumstances it may be preferable to dispense with wear plate 12. For example, in the nickel smelting industry, relatively fragile nickel "pucks" are transported via conveyors, hoppers, chutes, etc. The pucks can be damaged if they are allowed to strike a non-absorptive surface such as ferrous wear plate 12. Figure 3 depicts an alternate embodiment of the invention which overcomes this problem by eliminating wear plate 12. Instead of fixing retainer 10' in place by bolting, etc. as described above, retainer 10' is inverted as shown in Figure 3 to allow the harder layer 10B' to magnetically attach itself to a ferrous surface 1 A such as a suitable portion of a discharge chute, hopper, trunnion, etc. This leaves the softer layer 10A' uppermost to cushion the impact of fragile material 3A. Although softer layer 10A' is not as well suited to resist impact or abrasion as is harder layer 10B', it may in some cases be preferable to invert retainer 10' as aforesaid to better exploit the shock absorbing capability of softer layer 10A', for example in transporting fragile materials as described above.

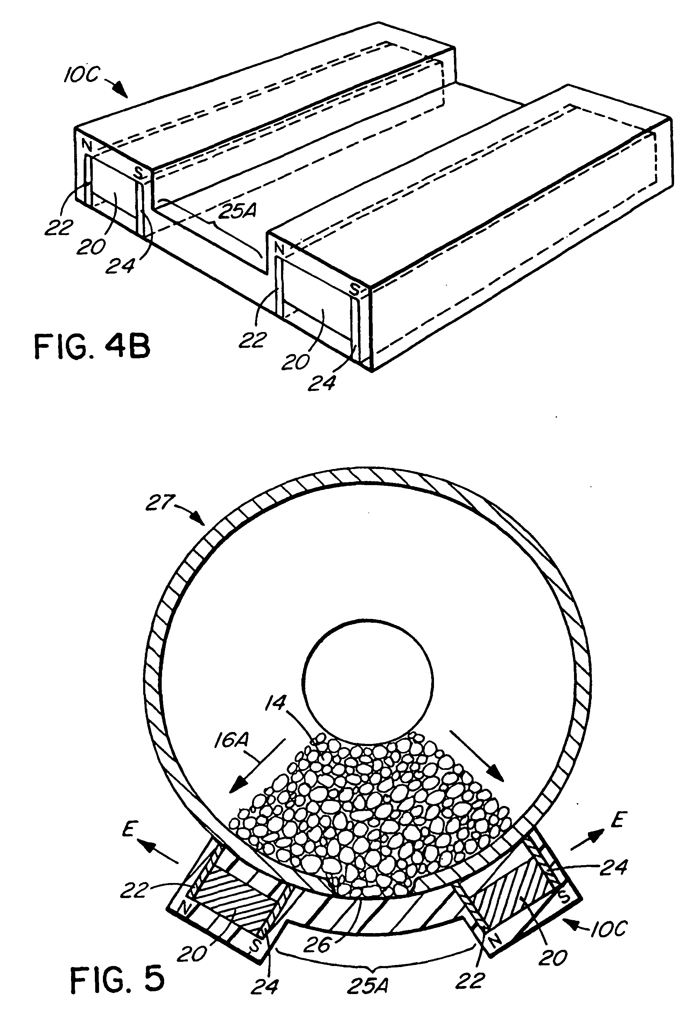

It is not always possible to accurately predict the wear pattern of a part which is subject to abrasive wearing, nor are areas subject to wear always readily accessible. It may be impractical, expensive, and/or hazardous to counteract such wearing using conventional repair techniques such as welding, cutting, braising, bolting, wiring or taping. This is especially so in the case of contoured surfaces which are subject to abrasive wearing, such as cylindrical pipes used to convey abrasive slurries or the like, discharge chutes, junctions, elbows, bends, twists, or loops in piping, tubing or ducting, etc. The embodiment of the invention depicted in Figures 4A, 4B, 5 and 6 is well suited to use in such situations.

Figures 4A, 4B, 5 and 6 depict a flexible, wear-resistant "patch" 10C consisting of a single layer of either hard or soft elastomeric material. Magnets 20 and pole pieces 22, 24 are embedded within patch 10C as previously described, except that a central, reduced width region 25A of elastomeric material extends between the opposed, wider left and right (as viewed in Figures 4A, 4B, 5 and 6) side regions which contain the embedded magnets. Reduced width region 25A contains no magnets and is thus more flexible than the wider magnet-embedded side regions of patch 10C. Flexibility is improved by using only one magnetic strip 20 on either side of region 25A, reducing the number of inflexible steel plate pole pieces. As best seen in Figure 5, patch 10C is flexibly conformed and magnetically attached to the outer surface of a contoured ferrous member such as cylindrical pipe wall 27 to cover worn region 26, which has become perforated due to continued passage of abrasive material 14 along the pipe in the direction of arrow 16A.

The size and shape of patch 10C can be varied to accommodate different host wear surfaces to accommodate factors such as the overall dimensions of the host wear surface, the dimensions (or anticipated dimensions) of the worn portion (eg. hole, perforation, crack, etc.) of the host wear surface, the size and nature of abrasive material 14 which is to be contained, the possibility that material 14 may be conveyed under hydraulic or pneumatic pressure, etc. When flexibly conformed and magnetically attached to pipe wall 27 to cover worn region 26 as aforesaid, patch 10C seals pipe wall 27 to prevent escape of abrasive material 14 through region 26. During affixation of patch 10C over worn region 26, the opposed left and right (as viewed in Figures 4A, 4B, 5 and 6) side regions of patch 10C are preferably forcibly drawn away from each other as indicated by arrows "E" in Figure 5, to more closely conform reduced width region 25A over worn region 26 and thereby improve the sealing capability of patch 10C to further minimize escape of abrasive material 14 through worn region 26.

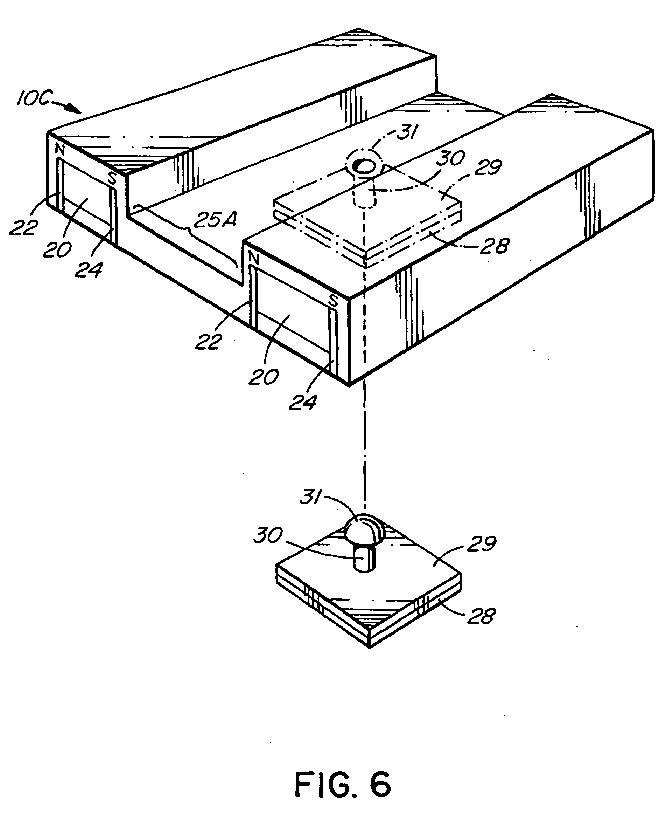

As seen in Figure 6, a relatively thin (approximately 0.5 to 1.0 cm thick) flexible, abrasion-resistant, elastomeric pad 28 can be optionally provided to further improve the sealing capability of patch 10C. In some cases, an adhesive can be used to fix pad 28 to the exterior surface of pipe wall 27 over worn region 26, prior to magnetic attachment of patch 10C to pipe wall 27 as aforesaid. However, it may not always be practical or convenient to use an adhesive to fix pad 28 to pipe wall 27. In such cases, a prefabricated unit incorporating pad 28, plate 29, stem 30 and cap 31 can be used.

More particularly, one end of rigid stem 30 is pre-attached (i.e. by welding) to a central surface portion of rigid plate 29. Enlarged, rigid cap 31 is pre-attached (i.e. by welding) to the opposite end of stem 30. An adhesive is then used to pre-attach plate 29 to a central surface portion of elastomeric pad 28. In the field, the workman simply bores a small hole (i.e. smaller than the diameter of cap 31) through reduced width region 25A of the elastomeric material used to form patch 10C, then forces cap 31 and stem 30 upwardly (as viewed in Figure 6) through the hole from one side of reduced width region 25A until cap 31 emerges through the opposite side of reduced width region 25A. Enlarged cap 31 prevents casual, unintended withdrawal of stem 30 through the hole, removably retaining pad 28 in position for sealing affixation over worn region 26 when patch 10C is flexibly conformed and magnetically attached to pipe wall 27 to cover worn region 26 as aforesaid. Pad 28 serves as a replaceable wear element.

Thus, instead of subjecting patch 10C to wearing by directly affixing patch 10C over worn region 26, one may apply pad 28 between patch 10C and worn region 26 by either of the above techniques. If pad 28 subsequently becomes worn by abrasive action of material 14, pad 28 can be removed, discarded and quickly and easily replaced with a fresh pad. This is accomplished by inserting a pry bar to break the magnetic forces attaching patch 10C to pipe wall 27, and removing patch 10C. If pad 28 is coupled to plate 29, stem 30 and cap 31 as aforesaid, then those elements are removed from pipe wall 27 together with patch 10C. Plate 29 can then be pulled perpendicularly away from patch 10C to forcibly withdraw cap 31 through the aforementioned hole. A replacement prefabricated unit incorporating a fresh pad 28 is then removably fixed to patch 10C, which can quickly and easily be replaced without any need for tools, adhesives, etc. If pad 28 was originally adhesively attached to pipe wall 27, then any portion of a pad 28 which may remain affixed to pipe wall 27 is removed by peeling, grinding, etc. A replacement pad 28 is then adhesively attached to pipe wall 27 and patch 10C is again flexibly conformed and magnetically attached to pipe wall 27 over the new pad 28 to cover worn region 26.

As will be apparent to those skilled in the art in the light of the foregoing disclosure, many alterations and modifications are possible in the practice of this invention without departing from the scope of the invention as mainly claimed in claims 1, 9, 17, 24 and 31. For example, instead of embedding magnets 20 in the harder 80A durometer material one could reverse the two layers and embed magnets 20 in the softer 55A durometer material so as to better exploit the shock absorbing capability of the softer material in particular situations. As another example, although it will usually be preferable to employ a dual layer retainer to obtain the combined benefits of impact and abrasion resistance (via the harder 80A durometer material) and shock absorption (via the softer 55A durometer material), it will not always be necessary to form retainer 10 (or 10') with two layers 10A and 10B (or 10A' and 10B'). In some cases it will be sufficient to eliminate either one of the two layers. Thus, a single layer of harder 80A durometer material with magnets 20 embedded therein can be employed if impact and abrasion resistance are primary requisites, with shock absorption being relatively unimportant. Conversely, a single layer of softer 55A durometer material with magnets 20 embedded therein can be employed if shock absorption is a primary requisites, with impact and abrasion resistance being relatively unimportant. In either case, single layer retainers will be less expensive and easier to fabricate than dual layer retainers of the same size. Although patch 10C preferably uses only one magnetic strip 20 on either side of region 25A, multiple magnetic strips and pole pieces can be used to improve the magnetic attachment capability of patch 10C, if the resultant degradation in flexibility of patch 10C is acceptable.

## Claims

1. A method of magnetically retaining a replaceable, ferrous wear plate (12) in position on a wear plate retainer (10) during passage of abrasive material (14) over said wear plate (12), said method **characterized by**:
(a) forming a lower retainer layer (10A) of a relatively soft, shock-absorbent material;
(b) forming an upper retainer layer (10B) of a relatively hard, impact and abrasion resistant material atop said lower layer (10A);
(c) embedding a plurality of magnets (20) within said upper layer (10B); and,
(d) placing said wear plate (12) atop said upper layer (10B) for magnetic retention of said wear plate (12) in said position by said magnets (20).

2. A method as defined in claim 1, further **characterized by**, for each one of said magnets (20), embedding a pair of pole pieces (22, 24) within said upper layer (10B) on opposed sides of each one of said magnets (20) and extending above said each one of said magnets (20).

3. A method as defined in claim 2, further **characterized by** forming a plurality of shock-absorbing recesses (18) in said lower layer (10A).

4. A method as defined in claim 2, further **characterized by** arranging said magnets (20) in a plurality of rows, with adjacent poles of adjacent pairs of said magnets (20) within adjacent pairs of said rows having alternate polarity.

5. A method as defined in claim 4, further **characterized by** arranging said rows respectively parallel to one another and extending transversely to a direction (16) of flow of said abrasive material (14) across said wear plate (12).

6. A method as defined in claim 4, further **characterized by** positioning said pole pieces (22, 24) with upper ends of said pole pieces substantially flush with a top face of said upper layer (10B).

7. A method as defined in claim 2, further **characterized by** forming said lower layer (10A) of 55A durometer polyurethane material and forming said upper layer (10B) of 80A durometer polyurethane material.

8. A method as defined in claim 2, further **characterized by** forming said upper layer (10B) and said lower layer (10A) of elastomeric materials.

9. A method of magnetically retaining a ferrous wear plate (12) in position for passage of abrasive material (14) over said wear plate (12), said method **characterized by**:
(a) forming a layer (10) of elastomeric material;
(b) embedding a plurality of magnets (20) within said elastomeric material; and,
(c) placing said wear plate (12) atop said elastomeric material for magnetic retention of said wear plate (12) in said position by said magnets (20).

10. A method as defined in claim 9, further **characterized by**, for each one of said magnets (20), embedding a pair of pole pieces (22, 24) within said elastomeric material on opposed sides of said each one of said magnets (20) and extending above said each one of said magnets (20).

11. A method as defined in claims 10, further **characterized by** forming a plurality of shock-absorbing recesses (18) in said elastomeric material.

12. A method as defined in claim 10, further **characterized by** arranging said magnets (20) in a plurality of rows, with adjacent poles of adjacent pairs of said magnets (20) within adjacent pairs of said rows having alternate polarity.

13. A method as defined in claim 12, further **characterized by** arranging said rows respectively parallel to one another and extending transversely to a direction (16) of flow of said abrasive material (14) across said wear plate (12).

14. A method as defined in claim 12, further **characterized by** positioning said pole pieces (22,24) with upper ends of said pole pieces (22, 24) substantially flush with a top face of said elastomeric material.

15. A method as defined in claim 10, wherein said elastomeric material is 55A durometer polyurethane material.

16. A method as defined in claim 10, wherein said elastomeric material is 80A durometer polyurethane material.

17. A method of cushioning fragile moving materials (3A), **characterized by**:
(a) forming an upper layer (10A') of a relatively soft, shock-absorbent material;
(b) forming a lower layer (10B') of a relatively hard, impact and abrasion resistant material beneath said upper layer (10A');
(c) embedding a plurality of magnets (20) within said lower layer (10B'); and,
(d) placing said lower layer (10B') on a ferrous surface (1A) over which said fragile materials (3A) are to be moved, to magnetically attach said lower layer (10B') to said ferrous surface and to position said upper layer (10A') to cushion impacts of said fragile materials (3A) against said upper layer (10A').

18. A method as defined in claim 17, further **characterized by**, for each one of said magnets (20), embedding a pair of pole pieces (22, 24) within said lower layer (10B') on opposed sides of said each one of said magnets (20) and extending above said each one of said magnets (20).

19. A method as defined in claim 18, further **characterized by** arranging said magnets (20) in a plurality of rows, with adjacent poles of adjacent pairs of magnets (20) within adjacent pairs of said rows having alternate polarity.

20. A method as defined in claim 19, further **characterized by** arranging said rows respectively parallel to one another and extending transversely to a direction of flow of said fragile material (3A).

21. A method as defined in claim 19, further **characterized by** positioning said pole pieces (22, 24) with upper ends of said pole pieces (22, 24) substantially flush with a bottom face of said lower layer (10B').

22. A method as defined in claim 18, further **characterized by** forming said upper layer (10A') of 55A durometer polyurethane material and forming said lower layer (10B') of 80A durometer polyurethane material.

23. A method as defined in claim 18, further **characterized by** forming said upper layer (10A') and said lower layer (10B') of elastomeric materials.

24. A method of resisting abrasion of a ferrous object by an abrasive material (3A, 14) passing over said object, said method **characterized by**:
(a) forming a layer of an elastomeric material;
(b) embedding a plurality of magnets (20) within said elastomeric material; and,
(c) placing said layer on said object, to magnetically attach said layer to said object and to position said layer for passage of said abrasive material over said layer.

25. A method as defined in claim 24, further **characterized by**, for each one of said magnets (20), embedding a pair of pole pieces (22, 24) within said layer on opposed sides of said each one of said magnets (20) and extending above said each one of said magnets (20).

26. A method as defined in claim 25, further **characterized by** arranging said magnets (20) in a plurality of rows, with adjacent poles of adjacent pairs of said magnets (20) within adjacent pairs of said rows having alternate polarity.

27. A method as defined in claim 26, further **characterized by** arranging said rows respectively parallel to one another and extending transversely to a direction of flow of said abrasive material (3A, 14).

28. A method as defined in claim 26, further **characterized by** positioning said pole pieces (22, 24) with opposed ends of said pole pieces respectively substantially flush with top and bottom faces of said layer.

29. A method as defined in claim 26, further **characterized by** forming said layer of 55A durometer polyurethane material.

30. A method as defined in claim 26, further **characterized by** forming said layer of 80A durometer polyurethane material.

31. Apparatus, comprising:
(a) an elastomeric material having a plurality of magnets (20) embedded within opposed first and second side regions of said elastomeric material to removably magnetically attach said apparatus to a ferrous object;
(b) for each one of said magnets (20), a pair of pole pieces (22, 24) embedded within said elastomeric material, said pole pieces (22, 24) respectively positioned on opposed sides of said each one of said magnets (20) and extending above said each one of said magnets (20); and,
(c) a plurality of shock-absorbing recesses (18) formed in said elastomeric material.
**characterised by**:
(d) a reduced thicknes region (25A) of said elastomer material extending between said first and second side regions of said elastomeric material.

32. Apparatus as defined in claim 31, wherein said plurality of magnets (20) is further **characterized by** a first one of said magnets (20) embedded within said first side region of said elastomeric material and a second one of said magnets (20) embedded within said second side region of said elastomeric material.

33. Apparatus as defined in claim 31, wherein said plurality of magnets (20) is further **characterized by** a first plurality of said magnets (20) embedded within said first side region of said elastomeric material and a second plurality of said magnets (20) embedded within said second side region of said elastomeric material, said magnets (20) arranged in rows, with adjacent poles of adjacent pairs of said magnets (20) within adjacent pairs of said rows having alternate polarity.

34. Apparatus as defined in claim 31, further **characterized by** an elastomeric pad (28) removably positionable between said ferrous object and said apparatus.

35. Apparatus as defined in claim 31, further **characterized by** a support plate (29) having one side fixed to said elastomeric pad (28), a stem (30) having one end fixed to an opposite side of said support plate (29), and a cap (31) fixed to an opposite end of said stem (30), said cap (31) removably insertable through an aperture in said reduced thickness region (25A).

36. Apparatus as defined in claim 31, wherein said elastomeric material is 55A durometer polyurethane material.

37. Apparatus as defined in claim 31, wherein said elastomeric material is 80A durometer polyurethane material.

38. Apparatus defined in claim 31, wherein said reduced thickness region (25A) is free of magnets.

## Patentansprüche

1. Verfahren zum magnetischen Halten einer auswechselbaren Verschleißplatte (12) aus Eisen in Position an einem Verschleißplattenhalter (10) während des Leitens von abtragendem Material (14) über die Verschleißplatte (12), wobei das Verfahren **gekennzeichnet ist durch**:
a) Ausbilden einer unteren Halterschicht (10A) aus einem relativ weichen, stoßdämpfenden Material;
b) Ausbilden einer oberen Halterschicht (10B) aus einem relativ harten, schlag- und abriebbeständigen Material auf der unteren Schicht (10A);
c) Einbetten einer Vielzahl von Magneten (20) in der oberen Schicht (10B); und
d) Auflegen der Verschleißplatte (12) auf der oberen Schicht (10B) zum magnetischen Halten der Verschleißplatte (12) in der Position **durch** die Magneten (20).

2. Verfahren nach Anspruch 1, des Weiteren **gekennzeichnet durch** Einbetten eines Paars Polstücke (22, 24) in der oberen Schicht (10B) an einander gegenüberliegenden Seiten jedes der Magneten (20) für jeden der Magneten, die sich über jedem der Magneten (20) erstrecken.

3. Verfahren nach Anspruch 2, des Weiteren **gekennzeichnet durch** Ausbilden einer Vielzahl stoßdämpfender Aussparungen (18) in der unteren Schicht (10A).

4. Verfahren nach Anspruch 2, des Weiteren **gekennzeichnet durch** Anordnen der Magneten (20) in einer Vielzahl von Reihen, wobei aneinander grenzende Pole aneinander grenzende Paare der Magneten (20) in aneinander grenzenden Paaren der Reihen abwechselnder Polarität haben.

5. Verfahren nach Anspruch-4, des Weiteren **gekennzeichnet durch** Anordnen der Reihen jeweils parallel zueinander und quer zu einer Richtung (10) des Stroms des abtragenden Materials (14) über die Verschleißplatte (12) verlaufend.

6. Verfahren nach Anspruch 4, des Weiteren **dadurch gekennzeichnet, dass** die Polstücke (22, 24), so positioniert werden, dass obere Enden der Polstücke im Wesentlichen bündig mit einer oberen Fläche der oberen Schicht (10B) sind.

7. Verfahren nach Anspruch 2, des Weiteren **gekennzeichnet durch** Ausbilden der unteren Schicht (10A) aus Polyurethanmaterial mit einer Durometer-Härte von 55A und Ausbilden der oberen Schicht (10B) aus Polyurethanmaterial mit einer Durometer-Härte von 80A.

8. Verfahren nach Anspruch 2, des Weiteren **gekennzeichnet durch** Ausbilden der oberen Schicht (10B) und der unteren Schicht (10A) aus Elastomermaterialien.

9. Verfahren zum magnetischen Halten einer Verschleißplatte (12) aus Eisen in Position zum Leiten von abtragendem Material (14) über die Verschleißplatte (12), wobei das Verfahren **gekennzeichnet ist durch**:
a) Ausbilden einer Schicht (10) aus Elastomermaterial;
b) Einbetten einer Vielzahl von Magneten (20) in dem Elastomermaterial; und
c) Auflegen der Verschleißplatte (12) auf dem Elastomermaterial zum magnetischen Halten der Verschleißplatte (12) in der Position **durch** die Magneten (20).

10. Verfahren nach Anspruch 9, des Weiteren **gekennzeichnet durch** Einbetten eines Paars Polstücke (22, 24) in dem Elastomermaterial an einander gegenüberliegenden Seiten jedes der Magneten (20) für jeden der Magneten, die sich über jedem der Magneten (20) erstrecken.

11. Verfahren nach Anspruch 10, des Weiteren **gekennzeichnet durch** Ausbilden einer Vielzahl stoßdämpfender Aussparungen (18) in dem Elastomermaterial.

12. Verfahren nach Anspruch 10, des Weiteren **gekennzeichnet durch** Anordnen der Magneten (20) in einer Vielzahl von Reihen, wobei aneinander grenzende Pole aneinandergrenzender Paare der Magneten (20) in aneinander grenzenden Paaren der Reihen abwechselnde Polarität haben.

13. Verfahren nach Anspruch 12, des Weiteren **gekennzeichnet durch** Anordnen der Reihen jeweils parallel zueinander und quer zu einer Richtung (16) des Stroms des abtragenden Materials (14) über die Verschleißplatte (12) verlaufend.

14. Verfahren nach Anspruch 12, des Weiteren **dadurch gekennzeichnet, dass** die Polstücke (22, 24) so positioniert werden, dass obere Enden der Polstücke (22, 24) im Wesentlichen bündig mit einer oberen Fläche des Elastomermaterials sind.

15. Verfahren nach Anspruch 10, wobei das Elastomermaterial ein Polyurethanmaterial mit einer Durometer-Härte von 55A ist.

16. Verfahren nach Anspruch 10, wobei das Elastomermaterial ein Polyurethanmaterial mit einer Durometer-Härte von 80A ist.

17. Verfahren zum Dämpfen sich bewegender Materialien (3A), **gekennzeichnet durch**:
a) Ausbilden einer oberen Halterschicht (10A') aus einem relativ weichen, stoßdämpfenden Material;
b) Ausbilden einer unteren Schicht (10B') aus einem relativ harten, schlag- und abriebfesten Material unter der oberen Schicht (10A');
c) Einbetten einer Vielzahl von Magneten (20) in der unteren Schicht (10B'); und
d) Auflegen der unteren Schicht (10B') auf einer Fläche (1A) aus Eisen, über die die zerbrechlichen Materialien (3A) bewegt werden sollen, um die untere Schicht (10B') magnetisch an der Fläche aus Eisen anzubringen und die obere Schicht (10A') so zu positionieren, dass sie Aufschläge der zerbrechlichen Materialien (3A) auf die obere Schicht (10A') dämpft.

18. Verfahren nach Anspruch 17, des Weiteren **gekennzeichnet durch** Einbetten eines Paars Polstücke (22, 24) in der unteren Schicht (10B') an einander gegenüberliegenden Seiten jedes der Magneten (20) für jeden der Magneten, die sich über jedem der Magneten (20) erstrecken.

19. Verfahren nach Anspruch 18, des Weiteren **gekennzeichnet durch** Anordnen der Magneten (20) in einer Vielzahl von Reihen, wobei aneinander grenzende Pole aneinandergrenzender Paare von Magneten (20) in aneinander grenzenden Paaren der Reihen abwechselnde Polarität haben.

20. Verfahren nach Anspruch 19, des Weiteren **gekennzeichnet durch** Anordnen der Reihen jeweils parallel zueinander und quer zu einer Richtung (16) des Stroms des zerbrechlichen Materials (3A) verlaufend.

21. Verfahren nach Anspruch 19, des Weiteren **dadurch gekennzeichnet, dass** die Polstücke (22, 24) so positioniert werden, dass obere Enden der Polstücke (22, 24) im Wesentlichen bündig mit einer unteren Fläche der unteren Schicht (10B') sind.

22. Verfahren nach Anspruch 18, des Weiteren **gekennzeichnet durch** Ausbilden der oberen Schicht (10A') aus Polyurethanmaterial mit einer Durometer-Härte von 55A und Ausbilden der unteren Schicht (10B') aus Polyurethanmaterial mit einer Durometer-Härte von 80A.

23. Verfahren nach Anspruch 18, des Weiteren **gekennzeichnet durch** Ausbilden der oberen Schicht (10A') und der unteren Schicht (10B') aus Elastomermaterialien.

24. Verfahren zum Verhindern von Abrieb eines Objektes aus Eisen durch ein abtragendes Material (3A, 14), das über das Objekt geleitet wird, wobei das Verfahren **gekennzeichnet ist durch**:
a) Ausbilden einer Schicht aus Elastomermaterial:
b) Einbetten einer Vielzahl von Magneten (20) in dem Elastomermaterial; und
c) Auflegen der Schicht auf dem Objekt, um die Schicht magnetisch an dem Objekt anzubringen und die Schicht zum Leiten des abtragenden Materials über die Schicht zu positionieren.

25. Verfahren nach Anspruch 24, des Weiteren **gekennzeichnet durch** Einbetten eines Paars Polstücke (22, 24) in der Schicht an einander gegenüberliegenden Seiten jedes der Magneten (20) für jeden der Magneten, die sich über jedem der Magneten (20) erstrecken.

26. Verfahren nach Anspruch 25, des Weiteren **gekennzeichnet durch** Anordnen der Magneten (20) in einer Vielzahl von Reihen, wobei aneinander grenzende Pole aneinander grenzender Paare der Magneten (20) in aneinander grenzenden Paaren der Reihen abwechselnde Polarität haben.

27. Verfahren nach Anspruch 26, des Weiteren **gekennzeichnet durch** Anordnen der Reihen jeweils parallel zueinander und quer zu einer Richtung des Stroms des abtragenden Materials (3A, 14) verlaufend.

28. Verfahren nach Anspruch 26, des Weiteren **dadurch gekennzeichnet, dass** die Polstücke (22, 24) so positioniert werden, dass einander gegenüberliegende Enden der Polstücke jeweils im Wesentlichen bündig mit einer oberen und einer unteren Fläche der Schicht sind.

29. Verfahren nach Anspruch 26, des Weiteren **gekennzeichnet durch** Ausbilden der Schicht aus Polyurethanmaterial mit einer Durometer-Härte von 55A.

30. Verfahren nach Anspruch 26, des Weiteren **gekennzeichnet durch** Ausbilden der Schicht aus Polyurethanmaterial mit einer Durometer-Härte von 80A.

31. Vorrichtung, die umfasst:
a) ein Elastomermaterial mit einer Vielzahl-von-Magneten (20), die in einander gegenüberliegenden ersten und zweiten Seitenbereichen des Elastomermaterials eingebettet sind, um die Vorrichtung abnehmbar magnetisch an einem Objekt aus Eisen anzubringen;
b) für jeden der Magneten (20) ein Paar Polstücke (22, 24), die in dem Elastomermaterial eingebettet sind, wobei die Polstücke (22, 24) jeweils an einander gegenüberliegenden Seiten jedes der Magneten (20) angeordnet sind und sich über jedem der Magneten (20) erstrecken; und
c) eine Vielzahl stoßdämpfender Aussparungen (18), die in dem Elastomermaterial ausgebildet sind,
**gekennzeichnet durch**:
d) einen Bereich (25A) des Elastomermaterials verringerter Dicke, der sich zwischen dem ersten und dem zweiten Seitenbereich des Elastomermaterials erstreckt.

32. Vorrichtung nach Anspruch 31, wobei die Vielzahl von Magneten (20) des Weiteren durch einen ersten der Magneten (20), der in dem ersten Seitenbereich des Elastomermaterials eingebettet ist, sowie einen zweiten der Magneten (20) **gekennzeichnet** ist, der in dem zweiten Seitenbereich des Elastomermaterials eingebettet ist.

33. Vorrichtung nach Anspruch 31, wobei die Vielzahl von Magneten (20) des Weiteren durch eine erste Vielzahl der Magneten (20), die in dem ersten Seitenbereich des Elastomermaterials eingebettet sind, und eine zweite Vielzahl der Magneten (20) **gekennzeichnet** ist, die in dem zweiten Seitenbereich des Elastomermaterials eingebettet sind, **gekennzeichnet** ist, und die Magneten (20) in Reihen angeordnet sind, wobei aneinander grenzende Pole aneinander grenzender Paare der Magneten (20) in aneinander grenzenden Paaren der Reihen abwechselnde Polarität haben.

34. Vorrichtung nach Anspruch 31, des Weiteren **gekennzeichnet durch** eine Elastomerauflage (28), die entfernbar zwischen dem Objekt aus Eisen und der Vorrichtung positioniert werden kann.

35. Vorrichtung nach Anspruch 31, des Weiteren **gekennzeichnet durch** eine Trageplatte (29), die eine Seite hat, die an der Elastomerauflage (28) befestigt ist, einen Schaft (30), der ein Ende hat, das an einer gegenüberliegenden Seite der Trageplatte (29) befestigt ist, und eine Kappe (31), die an einem gegenüberliegenden Ende des Schaftes (30) befestigt ist, wobei die Kappe (31) entfernbar **durch** eine Öffnung in dem Bereich (25A) verringerter Dicke eingeführt werden kann.

36. Vorrichtung nach Anspruch 31, wobei das Elastomermaterial ein Polyurethanmaterial mit einer Durometer-Härte von 55A ist.

37. Vorrichtung nach Anspruch 31, wobei das Elastomermaterial ein Polyurethanmaterial mit einer Durometer-Härte von 80A ist.

38. Vorrichtung nach Anspruch 31, wobei der Bereich (25A) verringerter Dicke frei von Magneten ist.

## Revendications

1. Procédé de retenue magnétique d'une plaque d'usure ferreuse, remplaçable (12) en position sur un dispositif de retenue de plaque d'usure (10), durant le passage d'un matériau abrasif (14) sur ladite plaque d'usure (12), ledit procédé étant **caractérisé par** :
(a) le formage d'une couche de retenue inférieure (10A) d'un matériau relativement mou, absorbant les chocs ;
(b) Le formage d'une couche de retenue supérieure (10B) d'un matériau relativement dur, résistant aux impacts et à l'abrasion, par dessus ladite couche inférieure (10A) ;
(c) l'incrustation d'une pluralité d'aimants (20) dans ladite couche supérieure (10B) ; et
(d) le placement de ladite plaque d'usure (12) par dessus ladite couche supérieure (10B) pour la retenue magnétique de ladite plaque d'usure (12) dans ladite position par lesdits aimants (20).

2. Procédé comme défini dans la revendication 1 **caractérisé en** outre, pour chacun desdits aimants (20), par l'incrustation d'une paire de pièces polaires (22, 24) dans ladite couche supérieure (10B) sur les côtés opposés à chacun desdits aimants (20) et s'étendant au-dessus dudit chacun desdits aimants (20).

3. Procédé comme défini par la revendication 2, **caractérisé en outre par** le formage d'une pluralité de renfoncements absorbant les chocs (18) dans ladite couche inférieure (10A).

4. Procédé comme défini par la revendication 2, **caractérisé en outre par** la disposition desdits aimants (20) sur une pluralité de rangées, où les pôles adjacents des paires adjacentes desdits aimants (20), à l'intérieur des paires adjacentes desdites rangées, présentent des polarités opposées.

5. Procédé comme défini dans la revendication 4, **caractérisé en outre par** la disposition desdites rangées respectivement parallèles l'une à l'autre et s'étendant transversalement par rapport à une direction (16) d'écoulement dudit matériau abrasif (14) à travers ladite plaque d'usure (12).

6. Procédé comme défini dans la revendication 4, **caractérisé en outre par** le positionnement desdites pièces polaires (22, 24) où les extrémités supérieures desdites pièces polaires sont sensiblement alignées avec une face supérieure de ladite couche supérieure (10B).

7. Procédé comme défini dans la revendication 2, **caractérisé en outre par** le formage de ladite couche inférieure (10A) avec un matériau de polyuréthane d'indice de dureté 55A, et par le formage de ladite couche supérieure (10B) avec un matériau de polyuréthane d'indice de dureté 80A.

8. Procédé comme défini dans la revendication 2, **caractérisé en outre par** le formage de ladite couche supérieure (10B) et de ladite couche inférieure (10A) avec des matériaux élastomères.

9. Procédé de retenue magnétique d'une plaque d'usure ferreuse (12) en position pour le passage d'un matériau abrasif (14) sur ladite plaque d'usure (12), ledit procédé étant **caractérisé par** :
(a) le formage d'une couche (10) de matériau élastomère ;
(b) l'incrustation d'une pluralité d'aimants (20) dans ledit matériau élastomère ; et
(c) le placement de ladite plaque d'usure (12) par dessus ledit matériau élastomère pour la retenue magnétique de ladite plaque d'usure (12) dans ladite position par lesdits aimants (20).

10. Procédé comme défini dans la revendication 9, **caractérisé en** outre, pour chacun desdits aimants (20), par l'incrustation d'une paire de pièces polaires (22, 24) dans ledit matériau élastomère sur les côtés opposés à chacun desdits aimants (20) et s'étendant au-dessus dudit chacun desdits aimants (20).

11. Procédé comme défini par la revendication 10, **caractérisé par** le formage d'une pluralité de renfoncements absorbant les chocs (18) dans ledit matériau élastomère.

12. Procédé comme défini par la revendication 10, **caractérisé en outre par** la disposition desdits aimants (20) sur une pluralité de rangées, où les pôles adjacents des paires adjacentes desdits aimants (20), à l'intérieur des paires adjacentes desdites rangées, présentent des polarités opposées.

13. Procédé comme défini dans la revendication 12, **caractérisé par** la disposition desdites rangées respectivement parallèles l'une à l'autre et s'étendant transversalement par rapport à une direction (16) d'écoulement dudit matériau abrasif (14) à travers ladite plaque d'usure (12).

14. Procédé comme défini dans la revendication 12, **caractérisé en outre par** le positionnement desdites pièces polaires (22, 24) où les extrémités supérieures desdites pièces polaires (22, 24) sont sensiblement alignées avec une face supérieure dudit matériau élastomère.

15. Procédé comme défini dans la revendication 10, dans lequel ledit matériau élastomère est un matériau polyuréthane d'indice de dureté 55A.

16. Procédé comme défini dans la revendication 10, dans lequel ledit matériau élastomère est un matériau polyuréthane d'indice de dureté 80A.

17. Procédé de capitonnage de matériaux mobiles fragiles (3A), **caractérisé par** :
(a) le formage d'une couche supérieure (10A') d'un matériau relativement mou, absorbant les chocs ;
(b) Le formage d'une couche inférieure (10B') d'un matériau relativement dur, résistant aux impacts et à l'abrasion par dessous ladite couche supérieure (10A') ;
(c) l'incrustation d'une pluralité d'aimants (20) dans ladite couche supérieure (10B') ; et
(d) Le placement de ladite couche inférieure (10B') sur une surface ferreuse (1A) sur laquelle lesdits matériaux fragiles (3A) doivent se déplacer, pour fixer magnétiquement ladite couche inférieure (10B') sur ladite surface ferreuse et pour positionner ladite couche supérieure (10A') de façon à amortir les impacts desdits matériaux fragiles (3A) contre ladite couche supérieure (10A').

18. Procédé comme défini dans la revendication 17, **caractérisé en** outre, pour chacun desdits aimants (20), par l'incrustation d'une paire de pièces polaires (22, 24) dans ladite couche inférieure (10B') sur les côtés opposés audit chacun desdits aimants (20) et s'étendant au-dessus dudit chacun desdits aimants (20).

19. Procédé comme défini par la revendication 18, **caractérisé par** la disposition desdits aimants (20) sur une pluralité de rangées, où les pôles adjacents des paires adjacentes desdits aimants (20), à l'intérieur des paires adjacentes desdites rangées, présentent des polarités opposées.

20. Procédé comme défini dans la revendication 19, **caractérisé par** la disposition desdites rangées respectivement parallèles l'une à l'autre et s'étendant transversalement par rapport à une direction d'écoulement dudit matériau fragile (3A).

21. Procédé comme défini dans la revendication 19, **caractérisé en outre par** le positionnement desdites pièces polaires (22, 24) où les extrémités supérieures desdites pièces polaires (22, 24) sont sensiblement alignées avec une face inférieure de ladite couche inférieure (10B').

22. Procédé comme défini dans la revendication 18, **caractérisé en outre par** le formage de ladite couche supérieure (10A') avec un matériau de polyuréthane d'indice de dureté 55A, et par le formage de ladite couche inférieure (10B') avec un matériau de polyuréthane d'indice de dureté 80A.

23. Procédé comme défini dans la revendication 18, **caractérisé en outre par** le formage de ladite couche supérieure (10A') et de ladite couche inférieure (10B') avec des matériaux élastomères.

24. Procédé pour la résistance à l'abrasion d'un objet ferreux par un matériau abrasif (3A, 14) passant sur ledit objet, ledit procédé étant **caractérisé par** :
(a) le formage d'une couche d'un matériau élastomère ;
(b) l'incrustation d'une pluralité d'aimants (20) dans ledit matériau élastomère ; et
(c) Le placement de ladite couche sur ledit objet, pour fixer magnétiquement ladite couche sur ledit objet et pour positionner ladite couche pour le passage dudit matériau abrasif sur ladite couche.

25. Procédé comme défini dans la revendication 24, **caractérisé en** outre, pour chacun desdits aimants (20), par l'incrustation d'une paire de pièces polaires (22, 24) dans chaque couche sur les côtés opposés audit chacun desdits aimants (20) et s'étendant au-dessus dudit chacun desdits aimants (20).

26. Procédé comme défini par la revendication 25, **caractérisé par** la disposition desdits aimants (20) sur une pluralité de rangées, où les pôles adjacents des paires adjacentes desdits aimants (20), à l'intérieur des paires adjacentes desdites rangées, présentent des polarités opposées.

27. Procédé comme défini dans la revendication 26, **caractérisé par** la disposition desdites rangées respectivement parallèles l'une à l'autre et s'étendant transversalement par rapport à une direction d'écoulement dudit matériau fragile (3A, 14).

28. Procédé comme défini dans la revendication 26, **caractérisé en outre par** le positionnement desdites pièces polaires (22, 24) où les extrémités opposées desdites pièces polaires sont sensiblement alignées avec une face supérieure de ladite couche supérieure.

29. Procédé comme défini dans la revendication 26, **caractérisé en outre par** le formage de ladite couche avec du matériau de polyuréthane d'indice de dureté 55A.

30. Procédé comme défini dans la revendication 26, **caractérisé en outre par** le formage de ladite couche avec du matériau de polyuréthane d'indice de dureté 80A.

31. Appareil, comprenant
(a) un matériau élastomère présentant une pluralité d'aimants (20) incrustés dans une première et une seconde zones latérales opposées dudit matériau élastomère pour fixer magnétiquement de manière amovible ledit appareil à un objet ferreux ;
(b) pour chacun desdits aimants (20), une paire de pièces polaires (22, 24) incrustées dans ledit matériau élastomère, lesdites pièces polaires (22, 24) étant respectivement positionnées sur les côtés opposés dudit chacun desdits aimants (20) et s'étendant au-dessus de chacun desdits aimants (20) ; et
(c) une pluralité de renfoncements absorbant les chocs (18) formés dans ledit matériau élastomère,
**caractérisé par** :
(d) une zone d'épaisseur réduite (25A) dudit matériau élastomère s'étendant entre lesdites première et seconde zones latérales dudit matériau élastomère.

32. Appareil comme défini dans la revendication 31, dans lequel ladite pluralité d'aimants (20) est **caractérisée en outre par le fait qu'**un premier desdits aimants (20) est incrusté dans ladite première zone latérale dudit matériau élastomère et qu'un second desdits aimants (20) est incrusté dans ladite seconde zone latérale dudit matériau élastomère.

33. Appareil comme défini dans la revendication 31, dans lequel ladite pluralité d'aimants (20) est **caractérisée en outre par le fait qu'**une première pluralité desdits aimants (20) est incrustée dans ladite première zone latérale dudit matériau élastomère et qu'une seconde pluralité desdits aimants (20) est incrustée dans ladite seconde zone latérale dudit matériau élastomère, lesdits aimants (20) étant disposés sur des rangées, où les pôles adjacents des paires adjacentes desdits aimants (20), dans les paires adjacentes desdites rangées, ont des polarités alternées.

34. Appareil comme défini dans la revendication 31, **caractérisé en outre par le fait qu'**un tampon élastomère (28) est positionnable de façon amovible entre ledit objet ferreux et ledit appareil.

35. Appareil comme défini dans la revendication 31, **caractérisé en outre par** une plaque de support (29) dont un côté est fixé audit tampon élastomère (28), par une tige (30) dont une extrémité est fixée à un côté opposé de ladite plaque de support (29), et par un capuchon (31) fixé sur une extrémité opposée de ladite tige (30), ledit capuchon (31) étant insérable de façon amovible à travers une ouverture dans ladite zone d'épaisseur réduite (25A).

36. Appareil comme défini dans la revendication 31 dans lequel le matériau élastomère est un matériau polyuréthane d'indice de dureté 55A.

37. Appareil comme défini dans la revendication 31, dans lequel ledit matériau élastomère est un matériau polyuréthane d'indice de dureté 80A.

38. Appareil défini dans la revendication 31, dans lequel ladite zone d'épaisseur réduite (25A) est dépourvue d'aimants.
